# EUROPÄISCHE PATENTANMELDUNG

(11) **EP 4 209 771 A1**
(43) Veröffentlichungstag der Anmeldung: **12.07.2023**
(21) Anmeldenummer: 23150465.5
(22) Anmeldetag: 05.01.2023
(51) Int. Cl.: G01N 1/22, B64U 101/35

(54) **VORRICHTUNG ZUR PROBENNAHME IN DER LUFT, VERWENDUNG UND VERFAHREN**

(30) Priorität: 07.01.2022 EP 22150598
(71) Anmelder: InfraServ GmbH & Co. Höchst KG, 65926 Frankfurt am Main (DE)
(72) Erfinder: Essel, Sven, 65926 Frankfurt (DE); Herzberg, Tom, 65428 Rüsselsheim (DE); Schmitt, Guido, 65929 Frankfurt (DE)
(74) Vertreter: Dörr, Klaus

(57) **Zusammenfassung**

Die Erfindung betrifft eine Vorrichtung zur Probennahme in der Luft mittels eines Fluggerätes und einem mit dem Fluggerät verbundenen Analyse- und Probennahme-System. Mit Hilfe der vorliegenden Erfindung können, insbesondere an schwer zugänglichen Orten, zuverlässig und gezielt Proben zu deren späterer Analyse entnommen werden.

## Beschreibung

Die Erfindung betrifft eine Vorrichtung zur Probennahme in der Luft mittels eines Fluggerätes und einem mit dem Fluggerät verbundenen Analyse- und Probennahme-System. Mit Hilfe der vorliegenden Erfindung können, insbesondere an schwer zugänglichen Orten, zuverlässig und gezielt Proben zu deren späterer Analyse entnommen werden.

Im Umfeld einer produzierenden Industrie sind Luft-Emissionen alltäglich und deren Überwachung mittels Emissionsmessung gängige Praxis. Der Zweck einer Emissionsmessung ist es, negative Umwelteinwirkungen durch Anlagen und Betriebe zu minimieren oder zu verhindern, indem Maßnahmen erschlossen werden, um die Qualität der Umgebungsluft aufrecht zu erhalten. Üblicherweise werden hierbei, je nach Art und Umfang der Produktion, kontinuierliche Messungen an definierten Messpunkten durchgeführt. Neben diesen kontinuierlichen Messungen an vordefinierten Orten, kann es notwendig sein, je nach Art und Umfang der Produktion, auch diskontinuierliche Messungen (beispielweise nach VDI 2448, Blatt 1), auch im üblichen zeitlichen Turnus, durch Probenahme an zu definierenden Messpunkten zu tätigen. Aufgrund der räumlichen Lage der Messpunkte sind hierzu temporäre Hilfsmittel, beispielsweise Messbühnen oder Hubsteiger, erforderlich.

Fluggeräte in der Form eines Zeppelins, die mit einer Probenahme-Einrichtung an der Unterseite ausgerüstet sind, sind beispielweise aus DE 101 22 139 A1 bekannt. Die dort verbaute Probenahme-Einrichtung weist mehrere Öffnungen im vorderen Teil auf, durch welche die Umgebungsluft eindringen kann.

Des Weiteren offenbart DE 10 2005 025 309 B3 ein Probenahme-System mit einem Fluggerät - beispielsweise einer Drohne - und mehreren Einheiten zum Aufnehmen von Gasproben, wobei diese Einheiten lösbar an dem Fluggerät angebracht sind und abwerfbar ausgebildet sind.

Aus US 6 854 344 B2 ist eine Aerosol-Sammeleinrichtung bekannt, die mit einem Fluggerät in Form einer Drohne koppelbar ist. Hierbei ist auf einem zentralen Kontrollmodul eine Gassammelvorrichtung angeordnet. Das Gehäuse der Gassammel-Vorrichtung ist mit luftdurchgängigen Passagen ausgestattet, um die Manövrierfähigkeit der Drohne nicht zu beeinträchtigen. Das Gassammeln selbst erfolgt über perforierte Filterscheiben. Um einen Luftdurchfluss durch die Gassammelvorrichtung zu erreichen, ist ein Lüfter vorgesehen.

Somit besteht ein Bedarf an flexiblen Systemen für eine schnelle und sichere, orientierende Probenahme, um auf Luftereignisse zu reagieren. Die hierbei zum Einsatz kommenden System sollten möglichst autonom sein, d.h. ein automatisches und gezieltes Sammeln von gasförmigen Proben zu deren späterer Analyse ermöglichen.

Gegenstand der vorliegenden Erfindung ist eine Vorrichtung umfassend:
(i) ein Fluggerät in Form einer Drohne, welche einen Hauptkörper (12) zur Aufnahme wenigstens einer Steuerung und einer Energieversorgung und einer Antriebsvorrichtung (16) zum Flugbetrieb aufweist,
(ii) mindestens einem Gas-Sammelmodul, welches mit dem Fluggerät verbunden ist, und das Gas-Sammelmodul
   a) mindestens einen Gas-Sammelbehälter, eine Pumpe, einen Gas-Ansaugstutzen und eine die Pumpe und den Gas-Sammelbehälter verbindende Gas-Leitung aufweist,
   b) der Gas-Sammelbehälter mit einem Ventilverschluss (32) versehen ist,
   c) das Gas-Sammelmodul mit der Steuerung und der Energieversorgung des Fluggeräts wirkverbunden ist, wobei das Gas-Sammelmodul auch eine zusätzliche Energieversorgung aufweisen kann,
   dadurch gekennzeichnet, dass
(iii) zwischen dem Gas-Ansaugstutzen und der Pumpe mindestens ein Gas-Sensoren für die Detektion gasförmiger Substanzen angeordnet ist,
(iv) in der verbindenden Gas-Leitung zwischen Pumpe und dem Ventilverschluss des Gas-Sammelbehälters ein 3/2-Wege Ventil angeordnet ist, wobei ein Ausgang des Ventils zum Gas-Sammelbehälter führt und ein Ausgang des Ventils zur umgebenden Abluft führt,
(v) der Gas-Sensor über eine elektrische Steuerung mit dem 3/2-Wege Ventil wirkend verbunden ist.

Mittels der erfindungsgemäßen Vorrichtung ist eine schnelle und sichere, orientierende Probenahme möglich. Hierzu kann die Drohne auf einem vorgegebenen Flugweg ein definiertes Gebiet drei-dimensional überfliegen und auf die Anwesenheit von vorgegebenen Emissionen untersuchen. Sollte während des Fluges, beispielsweise bei einer Deponie-Überwachung, eine zuvor vorgegebene Emission mittels des Gas-Sensors detektiert und ein vorgegebener Grenzwert für diese vorgegebene Emission überschritten werden, so schaltet die Steuerung den Ausgang des 3/2-Wege Ventil von der Position Abluft auf die Position zum Gas-Sammelbehälter um und eine Gas-Probe wird im Gas-Sammelbehälter aufgefangen. Nachdem der Gas-Sammelbehälter befüllt ist, wird der Ausgang des 3/2-Wege Ventils wieder auf die Position Abluft gestellt. Die Steuerung detektiert die Uhrzeit und den Ort der Probennahme mittels entsprechender Zeitmesser und Ortmesser, z.B. GPS, speichert diese oder übermittelt diese über eine Kommunikationsschnittstelle. Darüber hinaus kann das Fluggerät auch gezielt in vorhandene Abgasströme, beispielsweise Abgasströme von Schornsteinen, oder spontan entstandene Emissionen, beispielsweise bei Bränden oder Betriebsstörungen mit Stoffaustritten, vordringen und entsprechende Emissionen detektieren und ggf. Gas-Proben sammeln. Nach der Landung der Drohne kann die gesammelte Gas-Probe in einem Labor eingehender untersucht und analysiert werden.

Bei dem erfindungsgemäßen Fluggerät handelt sich um eine kommerziell verfügbare Drohne, die auch als UAV (Unmanned Aerial Vehicle) bezeichnet wird. Die erfindungsgemäß eingesetzten Drohnen sind sogenannte "Vertical Take-Off and Landing UAV", d.h. im Wesentlichen senkrecht startende und landende Drohnen, die keine spezielle Start- bzw. Landebahn noch spezielle Start- oder Landevorrichtungen benötigen. Die erfindungsgemäße eingesetzte Drohne verfügt über mindestens vier Elektromotoren mit jeweils einen waagrecht angeordneten Propeller, üblicherweise an Auslegern befestigt. Derartige Drohnen werden, je nach Anzahl der Motoren und Propeller auch als Quadrocopter, Hexacopter oder Octocopter bezeichnet. Beispiele für geeignete Drohnen sind Matrice 200 V2, Matrice 300 RTK oder Matrice 600 Pro.

Die Steuerung des Fluggeräts ist vorzugsweise auch mit einem Funkempfänger zum drahtlosen Empfangen von Steuersignalen von einem Fernsteuergerät versehen und mit einem GPS-System gekoppelt. Darüber hinaus kann die Steuerung auch autonom erfolgen, hierzu wird die Flugstrecke in der Steuerung des Fluggerätes gespeichert und mittel GPS-System abgeflogen.
In einer Ausführungsform wird das Fluggerät, insbesondere die Drohne, ferngesteuert und kann in einem Fernsteuerungsmodus betrieben werden.

In einer weiteren Ausführungsform fliegt das Fluggerät, insbesondere die Drohne, autonom und kann in einem autonomen Betriebsmodus betrieben werden. Diese Variante wird bei sogenannten Überwachungsflügen, beispielsweise in der Überwachung von Deponien, bevorzugt.

In einer weiteren Ausführungsform kann das Fluggerät, insbesondere die Drohne, sowohl fernsteuerbar als auch autonom fliegen. Hierbei kann das Fluggerät, insbesondere die Drohne, zwischen den beiden Betriebsmodi umgeschaltet werden. Diese Variante wird bevorzugt bei Flügen in vorhandene, üblicherweise bekannte, Abgasströme, beispielsweise Abgasströme von Schornsteinen, oder spontan entstandene Emissionen, beispielsweise bei Bränden oder Betriebsstörungen mit Stoffaustritten, bevorzugt.

Das Fluggerät kann vorzugsweise ferner eine fest montierte oder lösbar montierbare Kamera aufweisen, welche ebenfalls mit der Steuerung und der Energieversorgung des Fluggeräts wirkverbunden ist und welche die Bilder ggf. an eine Leitstelle für die Flugsteuerung übermittelt. Darüber hinaus kann das Fluggerät, insbesondere die Drohne, auch eine weitere Kommunikationsschnittstelle aufweisen, beispielsweise zu einem WLAN-Kommunikationsnetzwerk oder einem Mobilfunk-Kommunikationsnetzwerk.

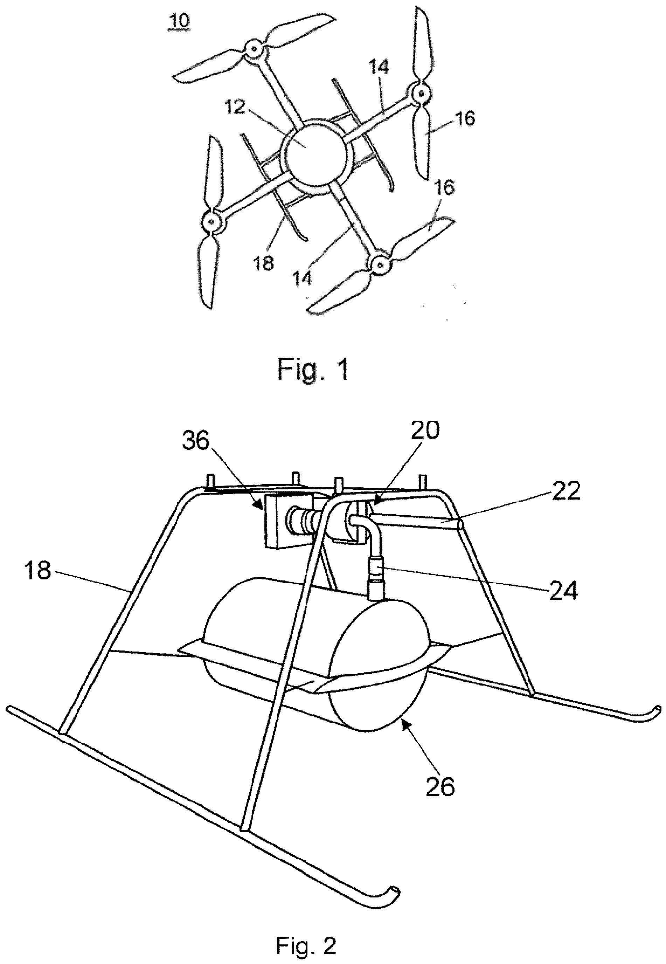

Figur1 zeigt eine Perspektivansicht einer herkömmlichen Drohne, bei welcher die vorliegende Erfindung bevorzugt anwendbar ist. Die Drohne 10 besteht im Wesentlichen aus einem Hauptkörper 12, in dem eine Steuerung, eine Energieversorgung (Batterie, Akkus, Solarzellen), ein Funkempfänger (zur Fernsteuerung) und ein GPS-System untergebracht sind, vier Tragarme 14, an deren Enden jeweils ein Propeller 16 angebracht ist (Antriebsvorrichtung zum Flugbetrieb), und ein Start- und Landegestell 18 an der Unterseite des Hauptkörpers 12.

Da der Aufbau und die Funktionsweise solcher Drohnen dem Fachmann hinlänglich bekannt sind, wird an dieser Stelle auf eine detailliertere Beschreibung bekannter Ausführungsformen verzichtet.

Das erfindungsgemäß eingesetzte Gas-Sammelmodul ist mit dem Fluggerät verbunden, wobei die Verbindung auch reversibel gelöst werden kann.

Der am Gas-Sammelmodul vorhandene Gas-Ansaugstutzen ist rohrförmig und üblicherweise selbsttragend ausgebildet. Darüber hinaus kann der Gas-Ansaugstutzen auch schlauchförmig ausgebildet sein. Aus Gründen der Gewichts-Minimierung besteht der Gas-Ansaugstutzen aus einem leichten Material, vorzugsweise aus Carbon, und weist eine Länge auf, die aus dem Luftstrom der Propeller herausragt, beispielsweise eine Länge von 170 cm mit einem Innendurchmesser von 1 cm. Durch das Rohr ist ein Luftschlauch (R-3603 von Tygon) gelegt. Dieser ist chemisch beständig und weist einen Innendurchmesser von 1,6 mm auf, sodass sogenannte Tot-Volumen geringgehalten werden können. Durch den Luftschlauch wird das Rohgas angesaugt. Bei einer Windgeschwindigkeit von ≥ 2 m/s hat der Luftstrom der Propeller keinen Einfluss mehr auf den Rohgasstrom.

Das Gas-Sammelmodul kann vorzugsweise ferner eine fest montierte oder lösbar montierbare Kamera aufweisen, welche ebenfalls mit der Steuerung und der Energieversorgung des Fluggeräts wirkverbunden ist und welche die Bilder ggf. an eine Leitstelle für die Flugsteuerung übermittelt.

Bei der erfindungsgemäß eingesetzten Pumpe handelt es sich vorzugsweise um eine kommerziell verfügbare Membran-Pumpe, da diese durch den zu pumpenden Gasstrom nicht kontaminiert werden. Beispiele für geeignete Pumpen sind beispielsweise aus DE 699 14 013 T2 oder US 5 107 713 A bekannt. Kommerziell verfügbare Membran-Pumpen sind D220BL von RS Pro, SP100 EC-DUp oder SP570 EC-LC von Schwarzer Precision GmbH + Co. KG.

Bei den erfindungsgemäß eingesetzten Gas-Sammelbehältern handelt es sich um Behälter deren Material möglichst chemisch inert ist gegenüber den Umgebungsbedingungen und den zu erwartenden chemischen Stoffen. Darüber hinaus sollten die Behälter bzw. eingesetzten Materialien auch gasdicht sein und möglich keine Diffusion zulassen. Des Weiteren sollten die eingesetzten Gas-Sammelbehälter auch physikalisch inert sein, d.h. die Umgebungstemperatur aushalten. Aufgrund des relativen geringen Gewichts werden Behälter aus polymeren Kunststoffen gegenüber Glas-Behältern bevorzugt. Neben Flaschen sind auch beutelförmige Behälter gleichermaßen geeignet.

Bei den erfindungsgemäß eingesetzten verbindenden Gas-Leitungen gilt das gleiche wie für die Gas-Sammelbehälter.

Die erfindungsgemäß eingesetzten Gas-Sammelbehälter weisen einen Ventilverschluss auf, sodass der Behälter vom System getrennt werden kann und das eingeschlossene Probenmaterial nicht entweichen kann oder andere Stoffe in den Gas-Sammelbehälter gelangen. Hierdurch ist auch ein anschließender gefahrloser Transport des Gas-Sammelbehälter möglich.

Geeignete Ventilverschlüsse sind kommerziell erhältlich z.B. Whisper Valve von Bürkert oder TX3P006LS05LB von First Sensor.

In einer bevorzugten Ausführungsform der Erfindung weist der Gas-Sammelbehälter noch ein Proben-Entnahme-System auf, durch welches Proben zur weiteren Untersuchung entnommen werden können. Vorzugsweise handelt es sich bei dem Proben-Entnahme-System um ein Septum, beispielsweise um NovaSeptum^{®} von Merck Millipore. Hierdurch können beispielsweise mit geeigneten Spritzen Analyseproben, beispielsweise für die Gas-Chromatographie, entnommen werden.

Das erfindungsgemäß eingesetzte Gas-Sammelmodul ist mit der Steuerung und der Energieversorgung des Fluggeräts wirkverbunden, sodass zusätzliche Energieversorgung nicht zwingend notwendig ist. Je nach verwendeten Drohnenmodell kann jedoch auch eine separate Energieversorgung für das Gas-Sammelmodul zum Einsatz kommen.

Die Wirkverbindung mit der Steuerung der Drohne ermöglicht die wechselseitige Übertragung von elektrischen Signalen zwischen Drohne und Gas-Sammelmodul, beispielsweise zur Bestimmung von Ort und Zeit der Probennahme.

Der Gas-Sammelbehälter liegt als externer Gas-Sammelbehälter getrennt vor. Bei der genannten Ausführungsform wird der externe Gas-Sammelbehälter an ein Modul aus Gas-Ansaugstutzen, Gas-Sensor, Pumpe und 3/2-Wege Ventil über eine verbindende Gas-Leitung am Ventilverschluss des Gas-Sammelbehälters verbunden.

Figur 2 zeigt eine schematische Perspektivansicht des Gas-Sammelmoduls.
Das Gas-Sammelmodul ist vorzugsweise lösbar an der Drohne, vorzugsweise an deren Hauptkörper, montierbare Funktionseinheit. Pumpe 20 weist einen mit der Ansaugseite der Pumpe 20 verbundenen Ansaugstutzen 22 zum Ansaugen eines Gasvolumens und eine mit der Förderseite der Pumpe 20 verbundene Gasleitung 24 auf. An die Gasleitung 24 ist ein Gas-Sammelbehälter 26 zum Aufnehmen der Gasproben angeschlossen. Die Gas-Sensoren (nicht dargestellt), sowie eine Filtereinheit (nicht dargestellt), befinden sich im Ansaugstutzen 22 vor der Pumpe. Das 3/2 Wege-Ventil (nicht dargestellt) befindet sind in der Gasleitung zwischen Pumpe und dem Gas-Sammelbehälter 26. Im Normalbetrieb, d.h. wenn die Gas-Sensoren keine Emissionen oberhalb des eingestellten Grenzwertes detektieren, verlässt das geförderte Gasvolumen die Vorrichtung an Auslass 36.

Bei den erfindungsgemäß eingesetzten Gas-Sensoren für die Detektion gasförmiger Substanzen handelt es sich um Sensoren der mittels physikalischer Messmethoden oder chemischer Messmethoden gasförmige Substanzen selektiv detektieren.

Bei den chemischen Messmethoden werden Substanzen unter Ausnutzung der chemischen Eigenschaften wie Reaktivität, Oxidierbarkeit und Reduzierbarkeit qualitativ und quantitativ detektiert.

Bei den physikalischen Messmethoden werden Substanzen unter Ausnutzung der molekularen Eigenschaften wie Molekülmasse, Diffusionsverhalten, Molekülstruktur (magnetische Eigenschaften, z.B. Paramagnetismus beim Sauerstoffsensor), Molekülstabilität (Bindungsenergie) und Molekülbeweglichkeit, qualitativ und quantitativ detektiert.

Die zugrundeliegenden elektrische Prinzipien sind hierbei
- Resistiv, Chemo-Resistor
   Bei resistiven Prinzipien beeinflusst das zu messende Gas oder Gasgemisch direkt die Leitfähigkeit einer gasempfindlichen Sensorschicht. Diese Widerstandsänderung dient als Messgröße. Beispiele hierfür sind anorganische Metalloxid-Halbleiter (MOX), organisches Phthalocyanin oder leitfähiges Polymer,
- Kapazitiv
   Messgröße ist hier die Kapazität eines Kondensators, die beeinflusst wird durch ein gasempfindliches Dielektrikum. Beispiele hierfür sind Polymersensoren zur Feuchtemessung,
- Potentiometrisch
   Beim potentiometrischen Sensor wird vom Sensor selbst eine Spannung erzeugt, die direkt messbar ist. Beispiele hierfür sind Festkörperlonenleiter (Lambdasonde) und Chemo-Transistor (Polymer-Feldeffekttransistor),
- Amperometrisch
   Ein amperometrischer Sensor liefert einen messbaren Strom. Beispiele hierfür sind elektrochemische Zelle (Clark-Elektrode), Flammenionisationsdetektor oder Photoionisationsdetektor,
- Thermisch
   Bei thermischen Prinzipien wird die Temperaturerhöhung aufgrund einer chemischen Reaktion an der Sensoroberfläche gemessen oder direkt die Wärmeleitfähigkeit des Gases als Messgröße verwendet,
- Thermochemisch
   Auf der Sensoroberfläche finden chemische Reaktionen statt, bei denen Energie in Form von Wärme abgegeben wird. Diese Temperaturerhöhung wird gemessen, z.B. Wärmetönungssensor (z.B. Pellistor),
- Thermisch-physikalisch
   Direkte Messung der Wärmeleitfähigkeit der Gasatmosphäre, z.B. Wärmeleitfähigkeitsdetektor
- Gravimetrisch
   Bei gravimetrischen Sensoren wird eine Massenänderung gemessen. Gasmoleküle lagern sich beispielsweise auf der Oberfläche eines Schwingquarzes ab und verändern dadurch seine Resonanzfrequenz. Solche Sensoren arbeiten nach dem Prinzip eines piezoelektrischen Sensors, z.B. Quarzkristall-Mikrowaagen, akustische Oberflächenwelle,
- Optisch
   Auch bei optischen Gassensoren handelt es sich um physikalische Prinzipien, bei denen die optischen Eigenschaften eines mit Gas gefüllten Probenraumes charakterisiert werden. Beispiele hierfür sind Brechungsindex, Absorptionsspektrum im Infrarotbereich, IR-Spektroskopie, Intensität, Lumineszenz.
- Biochemisch
   Biochemische Gassensoren folgen dem biologischen Vorbild der Umsetzung von bestimmten Stoffen oder Stoffgruppen. Sie verwenden verschiedene der oben aufgeführten Prinzipien zur Wandlung des Signals.

Bei den erfindungsgemäß eingesetzten 3/2-Wege Ventilen handelt es sich um kommerziell erhältliche Bauteile. Kommerziell verfügbare Ventile sind z.B. Whisper Valve von Bürkert oder TX3P006LS05LB von First Sensor.

Der erfindungsgemäß vorhandene Gas-Sensor für die Detektion gasförmiger Substanzen ist über eine elektrische Steuerung mit dem 3/2-Wege Ventil wirkend verbunden ist. Mittels der elektrischen Steuerung wird das elektrische Eingangssignal des Gas-Sensors detektiert. Mittels der elektrischen Steuerung wird ein oder mehrere Schwellenwerte für das elektrische Eingangssignal festgelegt; wird dieser Schwellenwert überschritten sendet die elektrische Steuerung ein elektrisches Signal zum 3/2-Wege Ventil, dieses schaltet und der Gasstrom wird umgeleitet. Nach Befüllung des Gas-Sammelbehälter, welches Volumen- oder Zeit-Gesteuert erfolgt, wird der Gasstrom erneut umgeleitet, in Richtung Auslass.

Wie bereits ausgeführt, ist Mittels der erfindungsgemäßen Vorrichtung eine schnelle und sichere, orientierende Probenahme, beispielsweise in Abgasströmen von Schornsteinen, möglich. Je nach Anwendungsfall werden zuvor Parameter festgelegt und deren Einhaltung überprüft. So können im zuvor beschriebenen Abgasstrom in Schornsteinen anhand des Rohgasstromes Grenzen im System festlegen zu können. Fliegt die Drohne nun mit ihrem Probenahme-Rohr (Gas-Ansaugstutzen) in den Rohgasstrom wird der ausgesuchte Parameter mittels des Gas-Sensors gemessen, sodass es bei einer Überschreitung der definierten Konzentration zum Umschalten eines 3-Wege-Ventils kommt und ein Probenahmegefäß (Gas-Sammelbehälter) gefüllt wird. Dadurch wird gewährleistet, dass eine Probenahme nur unter zuvor definierten Bedingungen stattfindet.

Ein weiterer Gegenstand der vorliegenden Erfindung ist die Verwendung der erfindungsgemäßen Vorrichtung zur Überwachung auf und ggf. orientierende Probenahme von Emissionen in der produzierenden Industrie bei welcher Luft-Emissionen auftreten können. Mit Hilfe der erfindungsgemäßen Vorrichtung können bei auftretenden Emissionen orientierende Probenahmen erfolgen, was insbesondere in Produktionsanlagen der chemischen und pharmazeutischen Industrie von hoher Bedeutung ist. Darüber hinaus können auch Verbrennungsprozesse oder Stoffaustritte, insbesondere spontane Verbrennungsprozesse oder spontane Stoffaustritte, untersucht und bewertet werden. Dies ist insbesondere im Rahmen des Notfallmanagements von chemischen und pharmazeutischen Anlagen oder bei der Überwachung von Deponien von hoher Relevanz, insbesondere im Rahmen der olfaktometrischen Analytik.

Wie bereits ausgeführt, ist Mittels der erfindungsgemäßen Vorrichtung eine schnelle und sichere, orientierende Probenahme möglich. Je nach Anwendungsfall werden zuvor Parameter festgelegt und deren Einhaltung überprüft.

Zur Durchführung der vorstehend bezeichneten Verfahren hat sich folgende Vorgehensweise für die erfindungsgemäße Flug-Vorrichtung herausgebildet:
(i) Ermittlung von Rohgasparametern,
(ii) Festlegung der Grenzwerte für die vorstehend genannten Rohgase,
(iii) Einstellen der vorstehend genannten Grenzwerte in der Steuerung Sensor und 3/2 Wege Ventil,
(iv) Bestimmung der Flugroute und Start der erfindungsgemäßen Flug-Vorrichtung,
(v) Abfliegen der Flugroute und kontinuierliche Messung des über den Ansaugstutzen eindringenden Gasstroms mittels der vorhandenen Gas-Sensoren, ggf. Einfliegen in einen vorher festgelegten Rohgasstroms,
(v) bei Überschreitung der zuvor festgelegten und eingestellten Grenzwerte sendet die Steuerung, mit welcher der Sensor verbunden ist, ein elektrisches Signal an das 3/2-Wege-Ventil und die Probennahme erfolgt oder
   bei Unterschreitung der zuvor festgelegten und eingestellten Grenzwerte erfolgt keine Probennahme,
(vi) Rückflug, Landung und ggf. Entnahme des Gas-Sammelbehälters zur weiteren Analytik.

Die Ermittlung der Rohgasparameter erfolgt anhand von bekannten oder zu erwartenden Rohgas-Bestandteilen. So werden beispielsweise bestimmte Gase im Rohgas nach Art und Zusammensetzung definiert und entsprechende Grenzwerte für diese Bestandteile festgelegt und in der Steuerung Sensor und 3/2 Wege Ventil hinterlegt. Nach dem Start wird die Flugroute abgeflogen oder die Drohne direkt in den zu untersuchenden Gasstrom eingeflogen. Hierbei erfolgt eine kontinuierliche Messung des über den Ansaugstutzen eindringenden Gasstroms mittels der vorhandenen Gas-Sensoren. Sollte während der Messung ein zuvor in der Steuerung definierte Grenzwert überschritten werden, so schaltet die Steuerung den Ausgang des 3/2-Wege Ventil von der Position Abluft auf die Position zum Gas-Sammelbehälter um und eine Gas-Probe wird im Gas-Sammelbehälter aufgefangen. Nachdem der Gas-Sammelbehälter befüllt ist, wir der Ausgang des 3/2-Wege Ventils wieder auf die Position Abluft gestellt. Die Steuerung detektiert die Uhrzeit und den Ort der Probennahme mittels entsprechender Zeitmesser und Ortmesser, z.B. GPS. Nach dem Rückflug und der Landung der Drohne kann die gesammelte Gas-Probe in einem Labor eingehender untersucht und analysiert werden

Wie bereits ausgeführt fliegt die Drohne bei der Durchführung des Verfahrens auf Überwachung einen vorgegebenen Flugweg in einem definierten Gebiet drei-dimensional ab und untersucht den Luftraum auf die Anwesenheit von vorgegebenen Emissionen. Sollte während des Fluges eine zuvor vorgegebene Emission mittels des kontinuierlich arbeitenden Gas-Sensors detektiert und ein vorgegebener Grenzwert für diese vorgegebene Emission überschritten werden, so schaltet die Steuerung den Ausgang des 3/2-Wege Ventil selbsttätig von der Position Abluft auf die Position zum Gas-Sammelbehälter um und eine Gas-Probe wird im Gas-Sammelbehälter aufgefangen. Nachdem der Gas-Sammelbehälter befüllt ist, wird der Ausgang des 3/2-Wege Ventils wieder auf die Position Abluft gestellt. Die Steuerung detektiert die Uhrzeit und den Ort der Probennahme mittels entsprechender Zeitmesser und Ortmesser, z.B. GPS, oder übermittelt diese Daten über eine Kommunikations-Schnittstelle an die Flugleitung. Wie bereits ausgeführt, kann das Fluggerät auch gezielt in vorhandene Abgasströme, beispielsweise Abgasströme von Schornsteinen, oder spontan entstandene Emissionen, beispielsweise bei Bränden oder Betriebsstörungen mit Stoffaustritten, vordringen und entsprechende Emissionen detektieren und ggf. Gas-Proben sammeln. Nach der Landung der Drohne kann die gesammelte Gas-Probe in einem Labor eingehender untersucht und analysiert werden.

## Patentansprüche

1. Vorrichtung umfassend:
(i) ein Fluggerät in Form einer Drohne, welche einen Hauptkörper (12) zur Aufnahme wenigstens einer Steuerung und einer Energieversorgung und einer Antriebsvorrichtung (16) zum Flugbetrieb aufweist,
(ii) mindestens einem Gas-Sammelmodul, welches mit dem Fluggerät verbunden ist, und das Gas-Sammelmodul
a) mindestens einen Gas-Sammelbehälter, eine Pumpe, einen Gas-Ansaugstutzen und eine die Pumpe und den Gas-Sammelbehälter verbindende Gas-Leitung aufweist,
b) der Gas-Sammelbehälter mit einem Ventilverschluss (32) versehen ist,
c) das Gas-Sammelmodul mit der Steuerung und der Energieversorgung des Fluggeräts wirkverbunden ist, wobei das Gas-Sammelmodul auch eine zusätzliche Energieversorgung aufweisen kann,
**dadurch gekennzeichnet, dass**
(iii) zwischen dem Gas-Ansaugstutzen und der Pumpe mindestens ein Gas-Sensor für die Detektion gasförmiger Substanzen angeordnet ist,
(iv) in der verbindenden Gas-Leitung zwischen Pumpe und dem Ventilverschluss des Gas-Sammelbehälters ein 3/2-Wege Ventil angeordnet ist, wobei ein Ausgang des Ventils zum Gas-Sammelbehälter führt und ein Ausgang des Ventils zur umgebenden Abluft führt,
(v) der Gas-Sensor über eine elektrische Steuerung mit dem 3/2-Wege Ventil wirkend verbunden ist.

2. Vorrichtung gemäß Anspruch 1, **dadurch gekennzeichnet, dass** die Drohne eine senkrecht startende und landende Drohne ist.

3. Vorrichtung gemäß Anspruch 1 oder 2, **dadurch gekennzeichnet, dass** die Drohne mindestens vier Elektromotoren mit jeweils einen waagrecht angeordneten Propeller aufweist.

4. Vorrichtung gemäß Anspruch 1, 2 oder 3, **dadurch gekennzeichnet, dass** die Drohne mit einem Funkempfänger zum drahtlosen Empfangen von Steuersignalen von einem Fernsteuergerät versehen und mit einem GPS-System gekoppelt ist.

5. Vorrichtung gemäß Anspruch 1, 2 oder 3, **dadurch gekennzeichnet, dass** die Drohne autonom betrieben wird und einen autonomen Betriebsmodus aufweist.

6. Vorrichtung gemäß einem oder mehreren der Ansprüche 1 bis 5, **dadurch gekennzeichnet, dass** die Drohne eine festmontierte oder lösbar montierbare Kamera aufweist, die vorzugsweise mit der Steuerung und der Energieversorgung des Fluggeräts wirkverbunden ist und vorzugsweise Bilder an eine Leitstelle für die Flugsteuerung übermittelt.

7. Vorrichtung gemäß einem oder mehreren der Ansprüche 1 bis 6, **dadurch gekennzeichnet, dass** die Drohne eine Kommunikationsschnittstelle zu einem WLAN-Kommunikationsnetzwerk oder einem Mobilfunk-Kommunikationsnetzwerk aufweist.

8. Vorrichtung gemäß einem oder mehreren der Ansprüche 1 bis 7, **dadurch gekennzeichnet, dass** das Gas-Sammelmodul mit dem Fluggerät verbunden ist und die Verbindung auch reversibel gelöst werden kann.

9. Vorrichtung gemäß einem oder mehreren der Ansprüche 1 bis 8, **dadurch gekennzeichnet, dass** der am Gas-Sammelmodul vorhandene Gas-Ansaugstutzen rohrförmig und vorzugsweise selbstragend ausgebildet ist.

10. Vorrichtung gemäß einem oder mehreren der Ansprüche 1 bis 9, **dadurch gekennzeichnet, dass** die Eintrittsöffnung des Gas-Ansaugstutzens aus dem Luftstrom der Propeller herausragt.

11. Vorrichtung gemäß einem oder mehreren der Ansprüche 1 bis 10, **dadurch gekennzeichnet, dass** die Pumpe eine Membran-Pumpe ist.

12. Vorrichtung gemäß einem oder mehreren der Ansprüche 1 bis 11, **dadurch gekennzeichnet, dass** der Gas-Sammelbehälter als externer Gas-Sammelbehälter vom Gas-Sammelmodul getrennt vorliegt.

13. Vorrichtung gemäß einem oder mehreren der Ansprüche 1 bis 12, **dadurch gekennzeichnet, dass** die Gas-Sensoren gasförmige Substanzen detektieren, vorzugsweise mittels physikalischer Messmethoden oder chemischer Messmethoden.

14. Vorrichtung gemäß Anspruch 13, **dadurch gekennzeichnet, dass** es sich bei den Gas-Sensoren um Sensoren handelt die mittels der Prinzipien (i) Resistiv, Chemo-Resistor, (ii) Kapazitiv, (iii) Potentiometrisch, (iv) Amperometrisch, (v) Thermisch, (vi) Thermochemisch, (vii) Thermisch-physikalisch, (viii) Gravimetrisch, (ix) Optisch oder (x) Biochemisch arbeiten.

15. Vorrichtung gemäß einem oder mehreren der Ansprüche 1 bis 14, **dadurch gekennzeichnet, dass** der Gas-Sensor über die elektrische Steuerung mit dem 3/2-Wege Ventil wirkend verbunden ist.

16. Verwendung der Vorrichtung gemäß den Ansprüchen 1 bis 15 zur Überwachung auf, und ggf. orientierende Probenahme von, Emissionen in der produzierenden Industrie oder von Deponien bei welchen Luft-Emissionen auftreten, insbesondere zur olfaktometrischen Analytik.

17. Verfahren zur Überwachung auf, und ggf. orientierende Probenahme von, Emissionen in der produzierenden Industrie oder von Deponien bei welchen Luft-Emissionen auftreten, insbesondere zur olfaktometrischen Analytik, mittels einer Vorrichtung gemäß den Ansprüchen 1 bis 15.

18. Verfahren gemäß Anspruch 17, umfassen die Maßnahmen:
(i) Ermittlung von Rohgasparametern,
(ii) Festlegung der Grenzwerte für die vorstehend genannten Rohgase,
(iii) Einstellen der vorstehend genannten Grenzwerte in der Steuerung Sensor und 3/2 Wege Ventil,
(iv) Bestimmung der Flugroute und Start der erfindungsgemäßen Flug-Vorrichtung,
(v) Abfliegen der Flugroute und kontinuierliche Messung des über den Ansaugstutzen eindringenden Gasstroms mittels der vorhandenen Gas-Sensoren, ggf. Einfliegen in einen vorher festgelegten Rohgasstroms,
(v) bei Überschreitung der zuvor festgelegten und eingestellten Grenzwerte sendet die Steuerung, mit welcher der Sensor verbunden ist, ein elektrisches Signal an das 3/2-Wege-Ventil und die Probennahme erfolgt
oder
bei Unterschreitung der zuvor festgelegten und eingestellten Grenzwerte erfolgt keine Probennahme,
(vi) Rückflug, Landung und ggf. Entnahme des Gas-Sammelbehälters zur weiteren Analytik.
